# EUROPEAN PATENT APPLICATION

(11) **EP 1 973 345 A1**
(43) Date of publication of application: **24.09.2008**
(21) Application number: 08100328.7
(22) Date of filing: 10.01.2008
(51) Int. Cl.: H04N 5/445

(54) **Apparatus and method for displaying broadcast program listing information**

(30) Priority: 20.03.2007 KR 20070027165
(71) Applicant: Samsung Electronics Co., Ltd, Suwon-si, Gyeonggi-do 442-742 (KR)
(72) Inventor: Seong, Ki-ae, Seoul (KR); Kwon, Yong-hwan, Gyeonggi-do (KR)
(74) Representative: Walaski, Jan Filip

(57) **Abstract**

A broadcast receiving apparatus which displays broadcast program listing information is disclosed. The broadcast receiving apparatus includes an EPG processor which configures an EPG screen displaying broadcast programs listing information as a plurality of icons, and a display unit which displays the EPG screen configured by the EPG processor. Accordingly, a user can select desired broadcast program quickly and easily.

## Description

The present invention relates to a display apparatus and a method for displaying broadcast program listing information.

A digital broadcast system provides more broadcast programs as compared to the analog broadcast system. A program guide in thus more desired, so that a user may check the programs provided and information about the programs with ease. The Electronic Program Guide (EPG) service is an example of the program guide.
The EPG service provides detailed information of broadcast programs through an unused frequency zone or a channel transmitting a broadcast signal. The EPG service provides EPG information such as broadcast program listing information on a screen of a digital television (TV). If a user selects a broadcast program title, the EPG screen may display various detailed information such as a channel number, start time of the broadcast program, and a synopsis of the selected program. Broadcast stations transmit additional data including the EPG information with image data and audio data to support the EPG service. EPG information may include a genre, title, and broadcast time of a program.

A related art EPG screen displays information of respective broadcast programs in time zones displayed on one screen in a bar graph form of the length corresponding to the length of broadcasting time. Displayable time zones on one screen are only one or two such that a user is unable to recognize the broadcast program listing information at a glance. Furthermore, attention of a user is dispersed because of superfluous broadcast program information on the screen. Therefore, an EPG screen of a new form is required.

If a particular time zone does not include broadcast programs, the conventional EPG screen displaying EPG information on a time axis generally displays 'No data' instead of a broadcast program title. A user views the broadcast programs by moving the EPG screen on the time axis, but because the EPG screen is moved by a fixed time unit (one or two hours, if 'No data' is displayed in a succession, the user has to move the EPG screen several times. As a result, search efficiency decreases. Additionally, if a broadcast program is broadcast for long hours, there is a problem that the user has to move the EPG screen several times if he wants to know the following broadcast program.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a display apparatus in which broadcast programs are represented as same number of icons corresponding to the number of the programs so that a user may check the programs provided and information about the programs with ease, and a method for displaying broadcast program listing information.

According to an aspect of the present invention, there is provided a display apparatus comprising an Electronic Program Guide (EPG) processor which configures an EPG screen displaying broadcast program listing information as a plurality of icons; and a display unit which displays the EPG screen configured by the EPG processor.

The EPG processor may display a broadcast time axis on the EPG screen, and display the icon of the broadcast programs according to an order of broadcasting, separately from the broadcast time axis.

The EPG processor may configure an EPG screen which displays the program listing state as icons of different colors for different broadcast time zones, and displays icons representing the broadcast programs in the same broadcast time zone in the same color.

The icon may be a block graph form.

The EPG processor may display the broadcast program listing information using a block graph comprising the same length blocks allocated in varying numbers according to the number of programs.

The EPG processor may configure an EPG screen which displays the block graph comprising the same length blocks allocated in varying numbers according to the number of programs alongside of the program information.

The EPG processor may configure an EPG screen which displays broadcast program listing information on the basis of a channel axis, and displays the program information of different broadcast channels between the icons.

The display apparatus may further comprise an input unit which receives a user command, and wherein the EPG processor changes a display state of the EPG screen according to the user command.

The EPG processor may configure an EPG screen which displays a listing state of broadcast programs on the basis of a channel axis, and changes an icon display state of broadcast programs corresponding to the selected channel number on the channel axis.

The EPG processor may enlarge the icon size of broadcast programs to change the icon display state according to the selected channel number.

The EPG processor may configure an EPG screen which displays a display state of broadcast programs on the basis of a channel axis and a broadcast time axis, and changes an icon corresponding to the selected broadcast program to a highlighted state.

If a channel selection is changed on the channel axis while the icon corresponding to the selected broadcast program is highlighted, the EPG processor may change the icon representing a broadcast program broadcast at the same time zone as the broadcast program selected in the changed channel number to a highlighted state.

If broadcast time selection is changed on the broadcast time axis while the icon corresponding to the selected broadcast program is highlighted, the EPG processor may shift position of the icons of broadcast programs in the changed broadcast time zone.

If broadcast time selection is changed on the broadcast time axis while the icon corresponding to the selected broadcast program is highlighted, the EPG processor may change the icon of broadcast program in the changed broadcast time zone to a highlighted state.

The EPG processor may configure an EPG screen which displays program information of the highlighted icon and an icon in the same channel as the highlighted icon at each side of the icons.

According to another aspect of the present invention, there is provided a method for displaying broadcast program listing information of a display apparatus, the method comprising a process of configuring an EPG screen which displays broadcast program listing information as a plurality of icons; and a process of displaying the EPG screen.

The configuring may display a broadcast time axis on the EPG screen, and display the icon of the broadcast programs according to an order of broadcasting, separately from the broadcast time axis.

The configuring may configure an EPG screen which displays the program listing state as icons of different colors for different broadcast time zones, and display icons representing the broadcast programs in the same broadcast time zone in the same color.

The icon may be a block graph form.

The configuring may display the broadcast program listing information using a block graph comprising the same length blocks allocated in varying numbers according to the number of programs.

The configuring may configure an EPG screen which displays the block graph comprising the same length blocks allocated in varying numbers according to the number of programs alongside of the program information.

The configuring may configure an EPG screen which displays broadcast program listing information on the basis of a channel axis, and displays the program information of different broadcast channels between the icons.

The method may further comprise a process of receiving a user command, and a process of changing a display state of the EPG screen according to the user command.

The changing may configure an EPG screen which displays a listing state of broadcast programs on the basis of a channel axis, and changes an icon display state of broadcast programs corresponding to the selected channel number on the channel axis.

The changing may enlarge the icon size of broadcast programs to change the icon display state according to the selected channel number.

The changing may configure an EPG screen which displays a display state of broadcast programs on the basis of a channel axis and a broadcast time axis, and changes an icon corresponding to the selected broadcast program to a highlighted state.

If a channel selection is changed on the channel axis while the icon corresponding to the selected broadcast program is highlighted, the changing may change the icon representing a broadcast program broadcast at the same time zone as the broadcast program selected in the changed channel number to a highlighted state.

If broadcast time selection is changed on the broadcast time axis while the icon corresponding to the selected broadcast program is highlighted, the changing may shift positions of the icons of broadcast programs in the changed broadcast time zone.

If broadcast time selection is changed on the broadcast time axis while the icon corresponding to the selected broadcast program is highlighted, the changing may change the icon of broadcast program in the changed broadcast time zone to a highlighted state.

The changing may configure an EPG screen which displays program information of the highlighted icon and an icon in the same channel as the highlighted icon at each side of the icons.

Embodiments of the invention will now be described, by way of example, with reference to the accompanying drawings, in which:
Figure 1 is a block diagram illustrating construction of a display apparatus according to an exemplary embodiment of the present invention;
Figures 2A and 2B are views illustrating an electronic program guide (EPG) screen on a screen of the display apparatus in Figure 1 according to an exemplary embodiment of the present invention;
Figure 3 is a block diagram illustrating construction of a display apparatus according to another exemplary embodiment of the present invention;
Figures 4A to 4C are views illustrating an EPG screen on the screen of the display apparatus in Figure 3 according to an exemplary embodiment of the present invention;
Figures 5A to 5C are views illustrating a process of changing an EPG screen according to a change of channel selection;
Figures 6A to 6D are views illustrating a process of changing an EPG screen according to a change of broadcast time selection;
Figure 7 is a view to explain in detail a change motion in Figure 6B;
Figure 8 is a flowchart to explain a method for displaying broadcast program listing information of a display apparatus according to an exemplary embodiment of the present invention;
Figure 9 is a flowchart to explain in detail the method for displaying broadcast program listing information in Figure 8; and
Figure 10 is a flowchart to explain in detail a method for displaying broadcast program listing information according to another exemplary embodiment of the present invention.

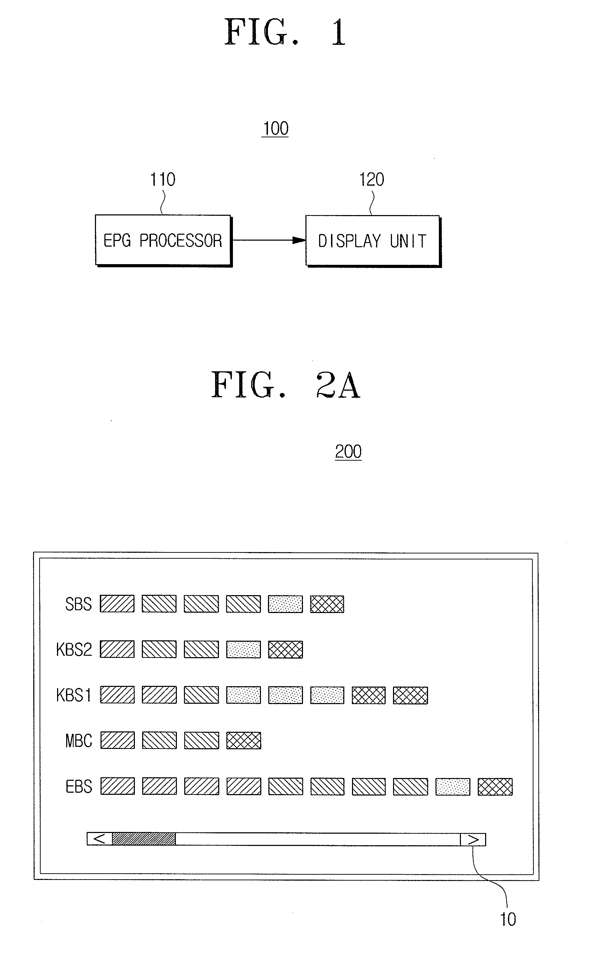

Figure 1 is a block diagram illustrating construction of a display apparatus according to an exemplary embodiment of the present invention. Referring to Figure 1, a display apparatus 100 may comprise an electronic program guide (EPG) processor 110, and a display unit 120.

The display apparatus 100 processes an infrared ray signal received from an external input apparatus such as a remote control, and may be possibly implemented as a set-top box or a digital television (TV) which receives a plurality of digital signals transmitted from a transmitter (not shown).

The transmitter (not shown) transmits a digital signal provided from a terrestrial broadcast, a cable broadcast, or a satellite broadcast, and the digital signal comprises a digital broadcast signal and EPG information of the digital broadcast signal. The 'EPG information' refers to broadcast program guide information with reference to the digital broadcast signal.

For example, if the digital broadcast signal is a terrestrial broadcast, the EPG information may be transmitted through the same frequency as the digital broadcast signal, and on the other hand, if the digital broadcast signal is a cable broadcast or a satellite broadcast, the EPG information may be transmitted through the different frequency from the digital broadcast signal.

The EPG processor 110 configures an EPG screen in which each broadcast program is displayed as a block, also referred to as an icon or a dot. For example, the EPG processor 110 may configure an EPG screen in which each broadcast program is displayed as a block in a block graph form. A block graph form refers to a plurality of blocks arranged in a line, each block representing a program and being arranged in a chronological order according to the program's broadcast time. A separate block graph may, for instance, be displayed for each channel. It will be described as an exemplary embodiment that the block or icon is displayed in the block graph form for convenient description.

The EPG processor 110 applies a block graph which shows blocks of different colors for different broadcast time zones, and may configure an EPG screen in which broadcast programs at the same time zone are displayed in the same color.

The EPG processor 110 may display broadcast programs using a block graph consisting of the same length blocks allocated in varying numbers according to the number of programs, and may configure the EPG screen in which the block graph consisting of blocks corresponding to the number of broadcast programs is displayed at one side of the program information.

Additionally, the EPG processor 110 may display a broadcast time axis on the EPG screen, and display the block graph of the broadcast programs according to an order of broadcasting, separately from the broadcast time axis. That is, the block graph displayed on the same broadcast axis may represent a broadcast program of broadcast time irrelevant to the broadcast channel time axis.

The EPG processor 110 may also display each broadcast program on the basis of a channel axis, and configure an EPG screen in which program information broadcast in each channel is displayed between the block graphs.

The display unit 120 displays the EPG screen configured by the EPG processor 110. For example, the display unit 120 may be implemented with various different display devices such as a plasma display panel (PDP) or a liquid crystal display (LCD).

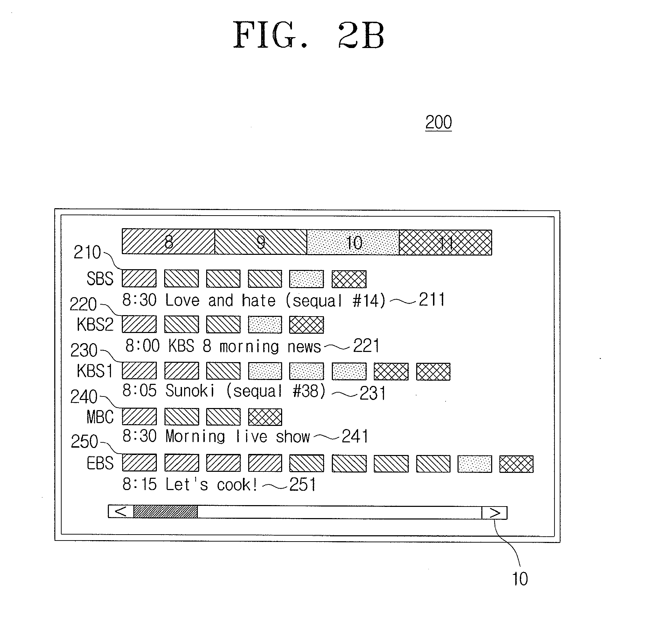

Figures 2A and 2B are views illustrating an EPG screen displayed on the screen of the display apparatus in Figure 1 according to an exemplary embodiment of the present invention.

Referring to Figure 2A, an arrangement of the broadcast programs is displayed in a form of a block graph or array consisting of uniformly-sized blocks corresponding to the number of broadcast programs. That is, six blocks representing six broadcast programs are displayed in a Seoul Broadcasting System (SBS) channel line, and five, eight, four, and ten blocks representing respective broadcast programs are displayed in a Korean Broadcasting System 2 (KBS2), Korean Broadcasting System 1 (KBS1), Munhwa Broadcasting Corporation (MBC), and Educational Broadcasting System (EBS) channel line.

The blocks representing broadcast programs at different time zones are displayed having different marks, patterns and/or colors, and the blocks representing the broadcast programs in the same broadcast time zone are displayed having the same mark, pattern or color. For example, the blocks are displayed in each channel line, representing the broadcast programs at four different time zones. That is, a forward-slanting hatching mark (▨) represents the 8:00 AM time zone, reverse-hatching mark (▧) represents 9:00 AM time zone, a dotted mark (░) represents 10:00 AM time zone, and a lattice or cross-hatching mark (▦) represents 11:00 AM time zone. It is noted that the different time zones may be distinguishable by using various different ways including, but not limited to, having blocks of different color, shape, size and/or mark. The SBS channel has one broadcast program in 8:00 AM time zone, three broadcast programs in 9:00 AM time zone, one broadcast program in 10:00 AM time zone, and one broadcast program in 11:00 AM time zone. The bar graph 10 which represents the other time zones before and after the time zones displayed on the current screen may be displayed at the bottom of the EPG screen.

The broadcast channel information may be on the left side of the screen, the block representing the broadcast program may be on the right side of the screen, and the bar graph may be displayed at the bottom of the screen according to an exemplary embodiment of the present invention, but it is merely an exemplary embodiment. Accordingly, this arrangement may be modified as occasion demands.

Referring to Figure 2B, a block graph consisting of the same length blocks allocated in varying numbers according to the number of the programs broadcast within the displayed time zones, is displayed alongside of the program information. The number of programs broadcast within the displayed time zones is, for instance, dependent on the length of each of the programs, where longer programs will result in fewer blocks being displayed. The program information may include a start time of the broadcast program, and a broadcast program title. The elements illustrated in Figure 2B are the same as those illustrated in Figure 2A, and thus a description thereof will be omitted for the sake of the brevity.

Referring to Figure 2B, broadcast program listing is displayed on the basis of a channel axis and a broadcast time axis, and the block graphs are displayed between the program information of different broadcast channels. That is, the start times of broadcast program and the broadcast program titles 211, 221, 231, 241, 251, which correspond to the blocks 210, 220, 230, 240, 250 in the first column among the blocks representing the broadcast programs of the respective broadcast channels, are displayed. For example, the block of the KBS2 channel line in the first column represents 'KBS morning news' for the broadcasting at 8:00 AM time zone.

The EPG screen is implemented as being displayed below each block, representing the program information regarding the block according to an exemplary embodiment of the present invention, but it is merely an exemplary embodiment and the above arrangement may be modified as occasion demands. Additionally, although it is implemented above that program information regarding a part of the block graph displayed on the screen is displayed on the screen, the EPG screen may be implemented to display the program information regarding the entire block graph at one side of the screen according to an alternative exemplary embodiment of the present invention. Many modifications are possible in various ways.

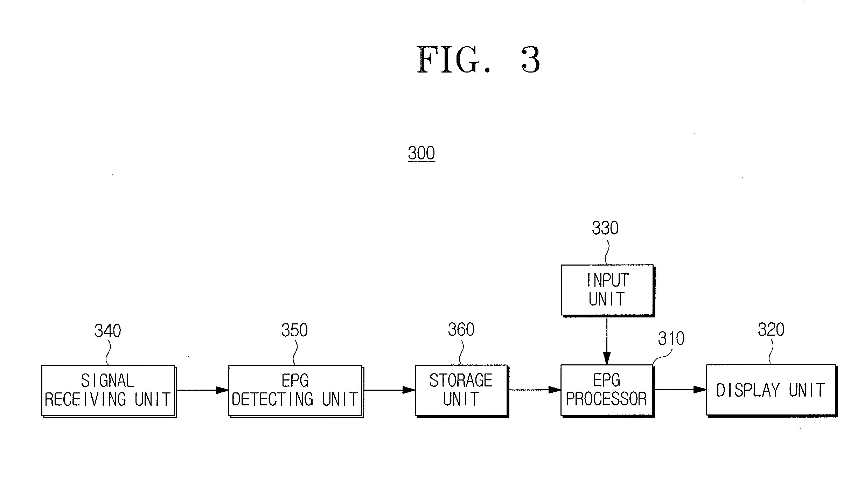

Figure 3 is a block diagram illustrating construction of a display apparatus according to another exemplary embodiment of the present invention. Referring to Figure 3, a display apparatus 300 may comprise an EPG processor 310, a display unit 320, an input unit 330, a signal receiving unit 340, an EPG detecting unit 350, and a storage unit 360. The elements illustrated in Figure 3 are the same as those illustrated in Figure 1 and thus a description thereof will be omitted for the sake of brevity.

The input unit 330 receives a user command to select or perform a function which the display apparatus 300 supports. The input unit 330 may be implemented as an external input apparatus such as a key panel or a remote control provided on a body of the display apparatus 300. The key panel and the remote control comprise a function key such as a plurality of number keys, and an Enter key. The input unit 330 comprises arrow keys to receive a user command which requests change of blocks to be marked in highlight, or broadcast programs on the EPG screen. The input unit 330 may be implemented as a light receiving unit (not shown) to receive a manipulation signal transmitted from the external input apparatus such as the remote control.

The signal receiving unit 340 receives a plurality of digital signals. That is, the signal receiving unit 340 receives the plurality of digital signals including digital broadcast signals and EPG information.

The EPG detecting unit 350 detects the EPG information from the plurality of digital signals received through the signal receiving unit 340. Because the EPG information is transmitted using a predefined area among video signal packets of the digital broadcast signal, the EPG information may be acquired by detecting and decoding information about the predefined area of the packets.

The storage unit 360 stores the EPG information detected by the EPG detecting unit 350. The stored EPG information may provide broadcast program listing information and detailed information of a broadcast program selected through the input unit 330.

The EPG processor 310 changes a display state of the EPG screen on the display unit 320 according to a user command input through the input unit 330.

The EPG processor 310 configures an EPG screen which displays the broadcast programs on the basis of the channel axis and the broadcast time axis. The EPG processor 310 may change a block graph display state of the broadcast programs regarding a channel number selected on the channel axis. For example, the EPG processor 310 may display a horizontal axis as a channel axis, and display a vertical axis as a broadcast time axis. If a specific channel is selected through the input unit 330, the EPG processor 310 may change the display state of the block graph corresponding to the broadcast programs of the selected specific channel distinctively from the display state of the block graph corresponding to the broadcast programs of other channels. For example, the display state may be changed in a manner of enlarging a block graph size of the broadcast programs according to the selected channel number.

The EPG processor 310 may change the block graph corresponding to a broadcast program selected on the EPG screen to a highlighted state. The highlighting may be implemented as various forms such as a flicker, a shadow, an arrow, a box, or a size or color change.

The EPG processor 310 may configure an EPG screen to display only program information corresponding to the highlighted block graph at one side of the block graph.

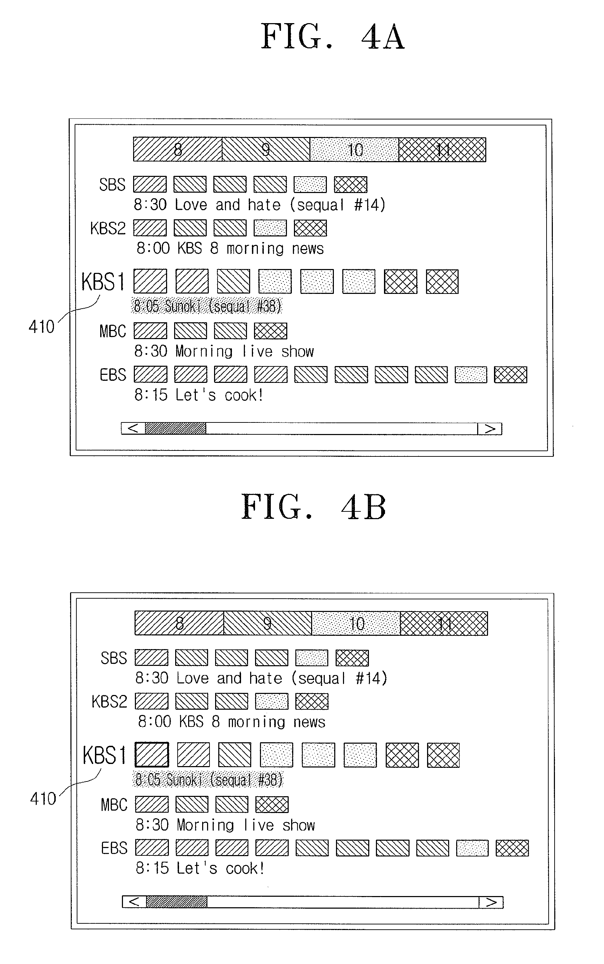

Figures 4A to 4C are views illustrating an EPG screen displayed on the screen of the display apparatus in Figure 3.

Referring to Figure 4A, broadcast program listings are displayed on the basis of a channel axis and a broadcast time axis, and a block graph display state of broadcast programs regarding a channel number selected on the channel axis is changed. That is, channel numbers such as SBS, KBS2, KBS1, MBC, and EBS are displayed on the vertical axis, and broadcast time zones such as 8:00 A.M., 9:00 A.M., 10:00 A.M., and 11:00 A.M. are displayed on the horizontal axis. The block graphs representing the broadcast programs are arranged on the basis of both axes. The size of the block graph of broadcast programs by channel KBS1 which is selected on the channel axis is changed to be distinguished from the block graph of broadcast programs of other channels.

Referring to Figure 4B, the block graph corresponding to the broadcast program selected on the EPG screen illustrated in Figure 4A is highlighted. That is, the "Soap opera-Sunoki(sequal #38)" which is broadcast at channel KBS1 and on 8:05 A.M. is selected, and the block representing the broadcast program is highlighted. The area which represents the channel number KBS1 and the program information (8:05 A.M. "Soap opera-Sunoki (sequal #38)") may also be highlighted.

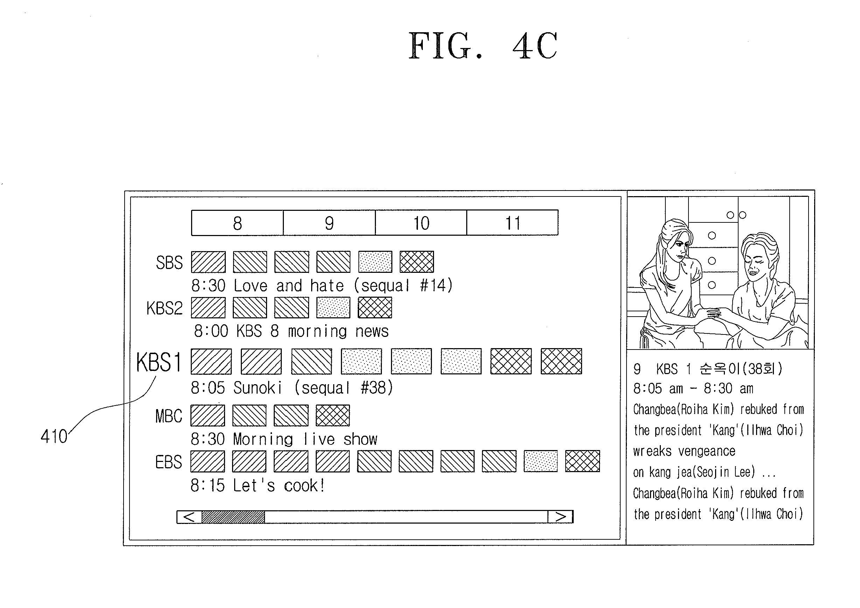

Referring to Figure 4C, detailed information such as a screen being currently broadcast and an outline of the selected broadcast program is displayed at one side of the EPG screen illustrated in Figure 4B. The EPG screen is implemented to display an area displaying the detailed information of the selected broadcast program on the right side of the screen according to an exemplary embodiment of the present invention, but it is merely an exemplary embodiment. Accordingly, a position of the detailed information may be modified as occasion demands. For example, the EPG screen is implemented as displaying the detailed information of the broadcast program on the left or upper side, or at the bottom of the screen.
If a channel selection is changed on the channel axis while the blocks representing a broadcast program selected through the input unit 330 is highlighted, the EPG processor 310 may change the blocks representing broadcast programs broadcast at the same time zone as the broadcast program selected in the changed channel number to a highlighted state.

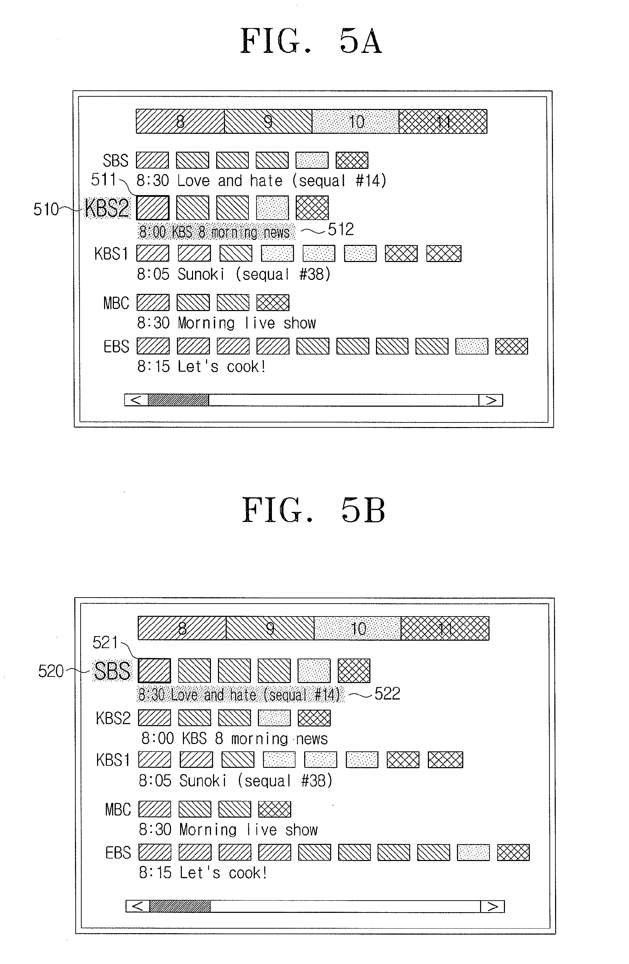

Figures 5A to 5C are views illustrating a process of changing an EPG screen according to a change of channel selection.

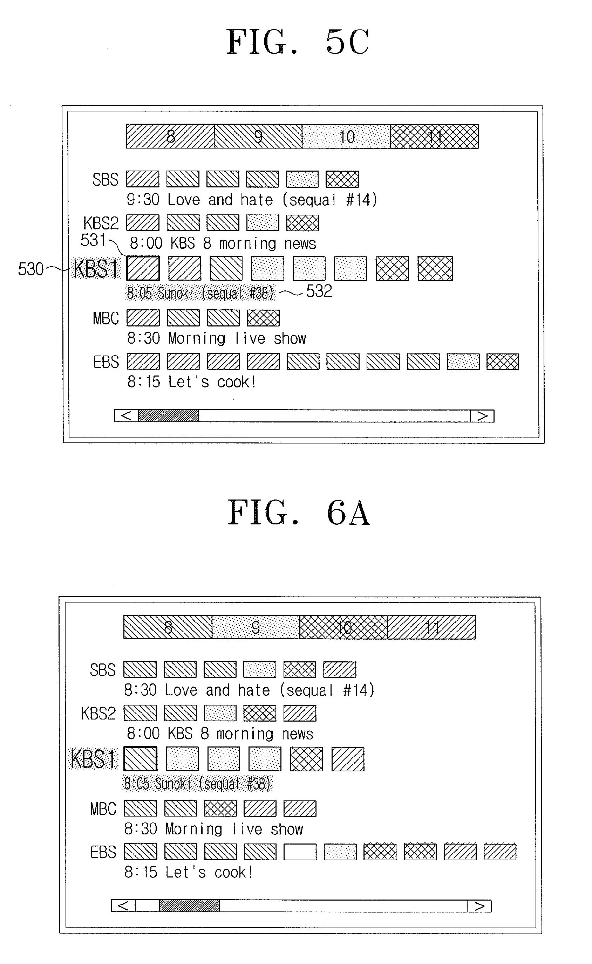

Referring to Figure 5, a broadcast program ("KBS 8 morning news") of a channel KBS2 510 is selected, and a block 511 representing the selected program and a program information display area 512 are highlighted.

Figure 5B is a view illustrating structure of the EPG screen in which a channel selection is changed to the upper direction on the EPG screen illustrated in Figure 5A.

Referring to Figure 5B, the highlighting of a block 511 representing "KBS 8 morning news" of KBS2 channel 510 is changed to a block 521 representing a broadcast program (8:30 AM "Soap opera- love and hate") of a SBS channel 520 which is broadcast on the same time zone as the "KBS 8 morning news". The highlight mark of the program listing information is also moved to a program information display area 522 of the highlighted blocks.

Figure 5C is a view illustrating structure of an EPG screen when channel selection is moved in the downward direction on the EPG screen in Figure 5A.

Referring to Figure 5C, the highlighting of a block 511 representing "KBS 8 morning news" of KBS2 channel 510 is changed to a block 531 representing a broadcast program (8:05 "Soap opera-Sunoki (sequal #38)") of the KBS1 channel 530 which is broadcast on the same time zone as the "KBS 8 morning news". The highlight mark of the program listing information is also moved to a program information display area 532 of the highlighted blocks.

If broadcast time selection is changed while block corresponding to the selected broadcast program is highlighted, the EPG processor 310 may shift an arrangement of the block graph of broadcast programs in the changed broadcast time zone. The EPG processor 310 configures an EPG screen in a manner of shifting the block graph while the highlighting is fixed, or the highlighting disappears in concurrence with movement of the block and is generated again.

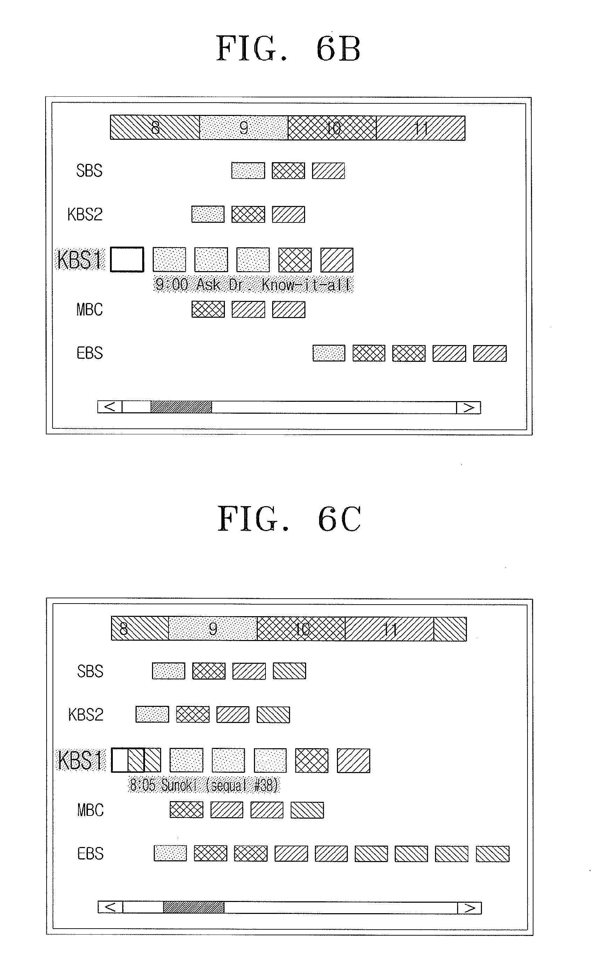

Figures 6A to 6D are views illustrating a process of changing an EPG screen according to a change of broadcast time selection.

If broadcast time selection is changed towards the right side on the EPG screen in Figure 6A, the block graph representing the broadcast program may be moved towards the left side. That is, the block graph is moved towards the left side while the highlighting is fixed in the first column.

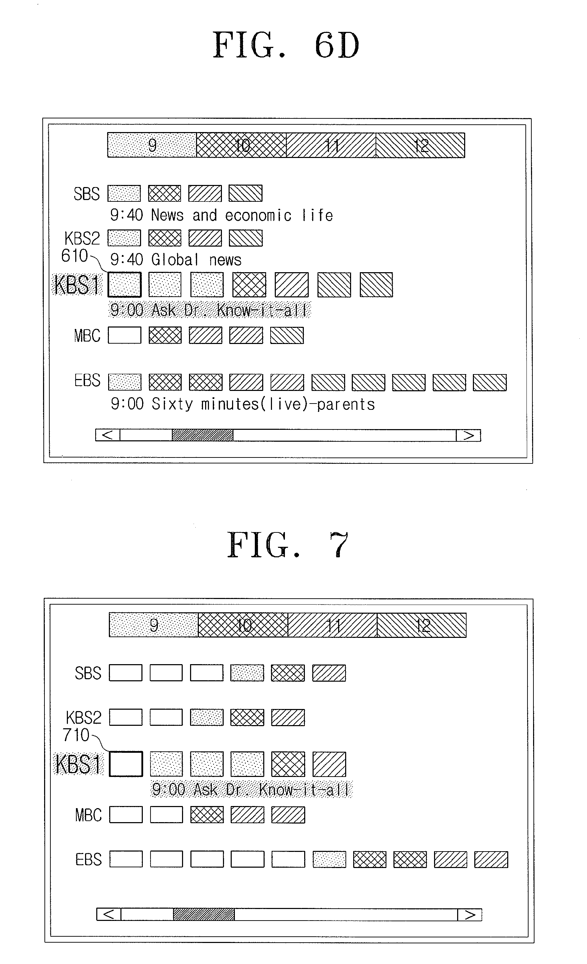

Figure 7 is a view to explain in detail a change motion in Figure 6B. Referring to Figure 7, the blocks on the left of the blocks in the same time zone as a block 710 to be highlighted may disappear as the block graphs are moved. That is, a block without marking disappears. However, it is merely an exemplary embodiment, and then it may be implemented that the block graph is moved to the left gradually in order to arrange the block graph to the adequate location.

Figure 6D is a view illustrating an EPG screen in which the change is completed. Blocks corresponding to the broadcast programs in the same time zone as the broadcast program corresponding to a block 610 in highlight are moved in the first column according to the movement of the block graph. Since there is no broadcast program broadcast at 9:00 AM on MBC channel, a block indicating that no program is broadcast in the time zone, may be displayed in the first column. For example, a block graph representing that no program is broadcast may take various forms such as an empty block, or an achromatic block. The number of time zones on the screen may preferably be fixed. If blocks of 8:00 AM time zone disappear from the screen, blocks of 12:00 PM time zone in the next broadcast time zone may newly appear on the screen.

Blocks representing the broadcast program are shifted while the highlight mark is fixed when the broadcast time selection is changed according to an exemplary embodiment of the present invention, however the EPG screen may be implemented to move the highlight mark as illustrated in Figures 5A to 5C. If the highlighting is moved towards the right side, a block graph regarding 12:00 P.M. in next time zone may be displayed on the screen. That is, if the highlighting is moved to the block regarding 11:00 A.M. in the last time zone on the current screen, blocks regarding 12:00 P.M. in the next time zone may be displayed on the screen.

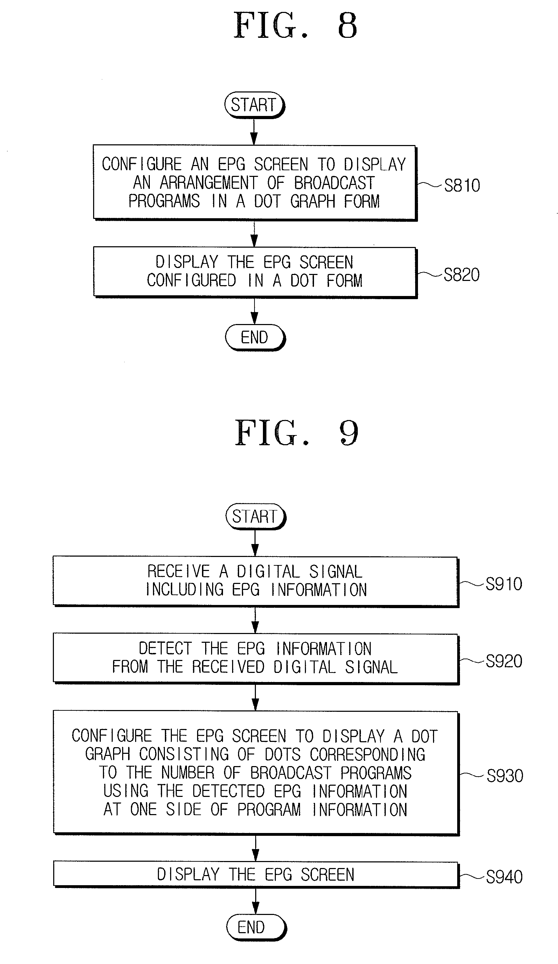

Figure 8 is a flowchart to explain a method for displaying broadcast program listing information of a display apparatus according to an exemplary embodiment of the present invention. Referring to the method for displaying broadcast program listing information of Figure 8, an EPG screen is configured to display an arrangement of broadcast programs in a block graph form (S810). That is, an arrangement of each broadcast programs may be displayed using a block graph consisting of the same length blocks allocated in varying numbers according to the number of broadcast programs. Additionally, the block graph shows as different colors for different broadcast time zones, and the blocks representing broadcast programs in the same length time zone may be displayed in the same color.

The EPG screen configured in a block form in operation S810 is displayed (S820).

Figure 9 is a flowchart to explain the method for displaying broadcast program listing information in Figure 8 in detail. Referring to the method for displaying broadcast program listing information of Figure 9, if a digital signal including EPG information is received through an antenna (S910), the EPG information is detected from the received digital signal (S920). The EPG screen is configured to display a block graph consisting of blocks corresponding to the number of broadcast programs using the detected EPG information at one side of program information (S930).

That is, the EPG screen is configured in a manner of displaying an arrangement of broadcast programs on the basis of a channel axis and a broadcast time axis, and a block graph is displayed between the program information of different broadcast channels. The program information may include a start time of the broadcast program, and a broadcast program title. The EPG screen configured in a block form in operation S930 is displayed (S940).

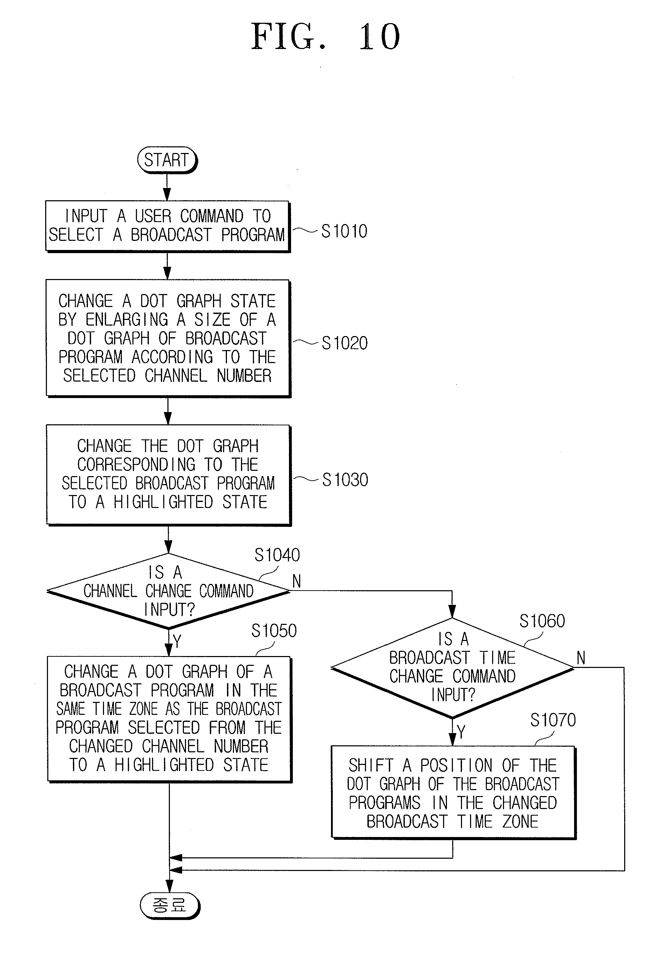

Figure 10 is a flowchart to explain a method for displaying broadcast program listing information according to another exemplary embodiment of the present invention.

Referring to a method for displaying broadcast program listing information of Figure 10, if a user command is input to select a broadcast program (S1010), on a channel axis, a block graph state is changed by enlarging a size of a block graph of broadcast program according to the selected channel number (S1020), and the block graph corresponding to the selected broadcast program is highlighted (S1030).

If a channel change command is input (S1040:Y), a block graph of a broadcast program in the same time zone as the broadcast program selected from the changed channel number is highlighted (S1050). The program information corresponding to the block graph in the same time zone as the block graph in a highlighted state may also be displayed at one side of the block graph. The EPG screen may be implemented to display the program information regarding the entire block graph displayed at one side of the screen. Many modifications are possible in various ways.

If a broadcast time change command is input (S1060:Y), a position of the block graph of the broadcast programs in the changed broadcast time zone may be shifted (S1070). According to a modified example, a highlighted mark may be fixed in the first column, while the broadcast programs are moved.

If a broadcast time selection is changed, blocks representing broadcast programs are shifted while the highlighted mark is fixed according to an exemplary embodiment of the present invention, however it may be implemented in order to change the highlighted mark. When the highlighting is changed towards the right side, a block graph in the next time zone may be displayed on the screen. That is, if the highlighting is changed to the blocks of 11:00 AM of the last time zone on the current screen, the blocks regarding 12:00 PM in the next time zone may be displayed on the screen.

Accordingly, a user can select desired broadcast program quickly and easily.

As described above, a broadcast program is displayed in a block graph form on an EPG screen such that a newly constructed EPG screen may be provided. Accordingly, the new concept of EPG screen can be provided. The required time for selecting a broadcast program is reduced due to a fast change of broadcast programs such that a user convenience is improved.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A broadcast receiving apparatus comprising:
an Electronic Program Guide (EPG) processor for configuring an EPG screen displaying broadcast program listing information as a plurality of icons; and
wherein the configured EPG screen is displayable on a display unit.

2. The broadcast receiving apparatus of claim 1, wherein the EPG processor generates a broadcast time axis on the EPG screen, and configures the icon of the broadcast programs according to an order of broadcasting, separately from the broadcast time axis.

3. The broadcast receiving apparatus of claim 1 or 2, wherein the EPG processor configures an EPG screen which shows the program listing state as icons of different marks and/or colors for different broadcast time zones, and shows icons representing the broadcast programs in the same broadcast time zone in the same marks and/or color.

4. The broadcast receiving apparatus of claim 1, 2 or 3, wherein the icon is a block graph form.

5. The broadcast receiving apparatus of claim 4, wherein the EPG processor configures the broadcast program listing information using a block graph comprising the same length blocks allocated in varying numbers according to the number of programs.

6. The broadcast receiving apparatus of claim 4, wherein the EPG processor configures an EPG screen which shows the block graph comprising the same length blocks allocated in varying numbers according to the number of programs alongside of the program information.

7. The broadcast receiving apparatus of any preceding claim, wherein the EPG processor configures an EPG screen which shows broadcast program listing information on the basis of a channel axis, and shows the program information of different broadcast channels between the icons.

8. The broadcast receiving apparatus of any preceding claim, further comprising:
an input unit which receives a user command, and
wherein the EPG processor changes a display state of the EPG screen according to the user command.

9. The broadcast receiving apparatus of claim 8, wherein the EPG processor configures an EPG screen which shows a listing state of broadcast programs on the basis of a channel axis, and changes an icon display state of broadcast programs corresponding to the selected channel number on the channel axis.

10. The broadcast receiving apparatus of claim 9, wherein the EPG processor enlarges the icon size of broadcast programs to change the icon display state according to the selected channel number.

11. The broadcast receiving apparatus of claim 8, wherein the EPG processor configures an EPG screen which shows a display state of broadcast programs on the basis of a channel axis and a broadcast time axis, and changes an icon corresponding to the selected broadcast program to a highlighted state.

12. The broadcast receiving apparatus of claim 11, wherein if a channel selection is changed on the channel axis while the icon corresponding to the selected broadcast program is highlighted, the EPG processor changes the icon representing a broadcast program broadcast at the same time zone as the broadcast program selected in the changed channel number to a highlighted state.

13. The broadcast receiving apparatus of claim 11, wherein if broadcast time selection is changed on the broadcast time axis while the icon corresponding to the selected broadcast program is highlighted, the EPG processor shifts position of the icons of broadcast programs in the changed broadcast time zone.

14. The broadcast receiving apparatus of claim 11, wherein if broadcast time selection is changed on the broadcast time axis while the icon corresponding to the selected broadcast program is highlighted, the EPG processor changes the icon of broadcast program in the changed broadcast time zone to a highlighted state.

15. The broadcast receiving apparatus of claim 11, wherein the EPG processor configures an EPG screen which shows program information of the highlighted icon and an icon in the same channel as the highlighted icon at each side of the icons.

16. The broadcast receiving apparatus of any preceding claim, further comprising a display unit for displaying the EPG screen configured by the EPG processor.

17. The broadcast receiving apparatus of claim 16, wherein the broadcast receiving apparatus is digital television.

18. The broadcast receiving apparatus of any preceding claim, wherein each of the program listing corresponds to each of the icons.

19. The broadcast receiving apparatus of claim 18, wherein EPG processor configures the EPG screen such that visual representations of icons corresponding to particular time zones are indicated in the EPG screen.

20. The broadcast receiving apparatus of claim 19, wherein in the EPG screen, the time zones are shown in the x-axis and the channel listing is shown in the y-axis.

21. The broadcast receiving apparatus of claim 20, wherein the alignment of the icons representing each of the program listing are independent from the time zones in the x-axis.

22. A method of configuring a broadcast program listing information to be displayed on a display apparatus, the method comprising:
configuring an EPG screen which displays broadcast program listing information as a plurality of icons; and
outputting the EPG screen for displaying on a display screen.

23. The method of claim 22, wherein the configuring step configures a broadcast time axis on the EPG screen, and configures the icon of the broadcast programs according to an order of broadcasting, separately from the broadcast time axis.

24. The method of claim 22 or 23, wherein the configuring step configures an EPG screen which shows the program listing state as icons of different colors for different broadcast time zones, and shows icons representing the broadcast programs in the same broadcast time zone in the same color.

25. The method of claim 22, 23 or 24, wherein the icon is a block graph form.

26. The method of claim 25, wherein the configuring step configures the broadcast program listing information using a block graph comprising the same length blocks allocated in varying numbers according to the number of programs.

27. The method of claim 25, wherein the configuring step configures an EPG screen which shows the block graph comprising the same length blocks allocated in varying numbers according to the number of programs alongside of the program information.

28. The method of any one of claims 22 to 27, wherein the configuring step configures an EPG screen which shows broadcast program listing information on the basis of a channel axis, and shows the program information of different broadcast channels between the icons.

29. The method of any one of claims 22 to 28, further comprising:
receiving a user command, and
changing a display state of the EPG screen according to the user command.

30. The method of claim 29, wherein the changing configures an EPG screen which shows a listing state of broadcast programs on the basis of a channel axis, and changes an icon display state of broadcast programs corresponding to the selected channel number on the channel axis.

31. The method of claim 29, wherein the changing enlarges the icon size of broadcast programs to change the icon display state according to the selected channel number.

32. The method of claim 29, wherein the changing configures an EPG screen which shows a display state of broadcast programs on the basis of a channel axis and a broadcast time axis, and changes an icon corresponding to the selected broadcast program to a highlighted state.

33. The method of claim 32, wherein if a channel selection is changed on the channel axis while the icon corresponding to the selected broadcast program is highlighted, the changing changes the icon representing a broadcast program broadcast at the same time zone as the broadcast program selected in the changed channel number to a highlighted state.

34. The method of claim 32, wherein if broadcast time selection is changed on the broadcast time axis while the icon corresponding to the selected broadcast program is highlighted, the changing shifts positions of the icons of broadcast programs in the changed broadcast time zone.

35. The method of claim 32, wherein if broadcast time selection is changed on the broadcast time axis while the icon corresponding to the selected broadcast program is highlighted, the changing changes the icon of broadcast program in the changed broadcast time zone to a highlighted state.

36. The method of claim 32, wherein the changing configures an EPG screen which shows program information of the highlighted icon and an icon in the same channel as the highlighted icon at each side of the icons.
